# EUROPÄISCHE PATENTSCHRIFT

(11) **EP 1 808 251 B1**
(45) Veröffentlichungstag und Bekanntmachung des Hinweises auf die Patenterteilung: **20.04.2011**
(21) Anmeldenummer: 06000860.4
(22) Anmeldetag: 16.01.2006
(51) Int. Cl.: B23H 1/02, B23H 7/26

(54) **Verfahren zum Überarbeiten von verschlissenen Erodierelektroden und zum erosiven Bearbeiten eines Werkstückes**
Method of dressing an erosion electrode and of electroerosive machining
Procédé de dressage d'un électrode d'érosion et d'usinage par électro-érosion

(43) Veröffentlichungstag der Anmeldung: 18.07.2007
(73) Patentinhaber: SIEMENS AKTIENGESELLSCHAFT, 80333 München (DE)
(72) Erfinder: Bublath, Boris, 13581 Berlin (DE); Heretsch, Gereon, 14482 Potsdam (DE)

(56) Entgegenhaltungen:
- GB-A- 1 293 576
- US-A- 2 969 482
- PATENT ABSTRACTS OF JAPAN Bd. 014, Nr. 177 (M-0960), 9. April 1990 (1990-04-09) & JP 02 030431 A (HODEN SEIMITSU KAKO KENKYUSHO LTD), 31. Januar 1990 (1990-01-31)
- PATENT ABSTRACTS OF JAPAN Bd. 003, Nr. 033 (M-052), 20. März 1979 (1979-03-20) & JP 54 007699 A (HITACHI LTD), 20. Januar 1979 (1979-01-20)

## Beschreibung

Die vorliegende Erfindung betrifft ein Verfahren zum erosiven Bearbeiten eines Werkstücks.

Werkstücke aus hochfesten Legierungen, insbesondere aus hochwarmfesten Legierungen wie etwa Superlegierungen auf Nickel-, Kobalt- oder Eisenbasis sind mit herkömmlichen mechanischen Werkzeugen nicht mehr ohne weiteres zu bearbeiten. Bearbeitungsschritte wie etwa Senken, Schneiden oder Abtragen werden daher bei diesen Materialien mittels Funkenerosion durchgeführt. Dabei wird das Werkstück zusammen mit einer Erodierelektrode in eine dielektrische Flüssigkeit gegeben, wobei die Elektrode mit geringem Abstand zu der zu bearbeitenden Stelle des Werkstückes, beispielsweise über seiner Oberfläche, angeordnet wird. Zwischen der Elektrode und dem Werkstück wird eine Spannung angelegt, welche das Ausbilden eines elektrischen Feldes zwischen der Elektrode und dem Werkstück zur Folge hat. Dabei entsteht ein Funkenüberschlag zwischen der Erodierelektrode und dem Werkstück, der zu einem Verdampfen und Ironisieren von Molekülen der dielektrischen Flüssigkeit führt. Auf diese Weise entsteht ein Plasmakanal, in dem so hohe Temperaturen herrschen, dass Material vom Werkstück verdampft.

Das Bearbeiten mittels Funkenerosion bietet die Vorteile, dass die Werkzeugelektrode aus leicht bearbeitbarem Material hergestellt sein kann und dass sich enge Bearbeitungstoleranzen realisieren lassen. Auch sind eine Vielzahl geometrischer Formen beim Bearbeiten mittels Funkenerosion zu realisieren. Dabei ist insbesondere die Form der Erodierelektrode von Be deutung, da der Erodierprozess zu einem Abbild der Elektrode im zu bearbeitendem Werkstück führt.

Während der Bearbeitung des Werkstückes mittels der Erodierelektrode findet ein Verschleiß der Elektrode statt, der dazu führt, dass die Form der Elektrode nicht mehr optimal an den Bearbeitungsvorgang angepasst ist. Dadurch verschlechtert sich die Qualität der erosiven Bearbeitung.

Um verschlissene Erodierelektroden abzurichten, das heißt zu überarbeiten, werden diese bisher in festgelegten Intervallen aus dem Elektrodenhaltern ausgebaut und außerhalb der Erodiermaschine mechanisch nachgearbeitet, um die ursprüngliche Form der Elektrode wieder herzustellen. Das Aus- und wieder Einbauen der Erodierelektroden aus den Elektrodenhalten erfolgt manuell und ist daher arbeits- und kostenintensiv.

Die GB 2 357 339 A1 offenbart ein Verfahren, bei dem Löcher hergestellt werden und die EDM-Elektrode an einer anderen Stelle überarbeitet wird.

Aufgabe der vorliegenden Erfindung ist es ein vorteilhaftes Verfahren zum erosiven Bearbeiten eines Werkstückes zur Verfügung zu stellen.

Die Aufgabe wird durch ein Verfahren zum erosiven Bearbeiten eines Werkstückes nach Anspruch 1 gelöst.

Im erfindungsgemäßen Verfahren wird eine verschlissene Erodierelektrode auf eine bereits für das Durchführen der erosiven Bearbeitung vorbereitete Oberfläche des Werkstückes gerichtet. Dabei werden die elektrischen Parameter für die Spannungspulse zwischen der Erodierelektrode und dem Werkstück derart eingestellt, dass an der Erodierelektrode ein stärkerer, insbesondere ein viel stärkerer Materialabtrag als an der vorbereiteten Oberfläche stattfindet.

Im erfindungsgemäßen Verfahren wird also eine Oberfläche des zu bearbeitenden Werkstückes zum Abrichten der Erodierelektrode herangezogen, also zum Wiederherstellen der ursprünglichen Elektrodenform. Wenn die Erodierelektrode auf diese Weise abgerichtet wird, kann sie während des Überarbeitens in den Elektrodenhaltern verbleiben. Ein Arbeits- und Kostenintensives Aus- und Einbauen der Elektrode aus beziehungsweise in den Elektrodenhalter ist nicht mehr nötig. Da an jedem neuen zu bearbeitenden Werkstück eine für die erosive Bearbeitung vorbereitete Oberfläche vorhanden ist, kann das erfindungsgemäße Verfahren zum Überarbeiten von verschlissenen Erodierelektroden an jedem neuen Werkstück durchgeführt werden. Es bietet sich daher insbesondere an, das Verfahren zum Überarbeiten der Erodierelektrode in ein Verfahren zum erosiven Bearbeiten eines Werkstückes mit einer zur erosiven Bearbeitung vorbereiteten Oberfläche zu integrieren. Es wird dann vor der erosiven Bearbeitung des Werkstückes eine Überarbeitung der Erodierelektrode mit dem erfindungsgemäßen Verfahren vorgenommen. Auf diese Wiese steht vor Beginn der erosiven Bearbeitung eines Werkstückes immer eine frisch abgerichtete Erodierelektrode zur Verfügung.

Als elektrische Parameter, die zu einem stärkerem Materialabtrag an der Erodierelektrode als an der Bauteiloberfläche führen, können insbesondere Spannungspulse mit einer Pulsdauer gewählt werden, die im Vergleich zu den Spannungspulsen beim erosiven Materialabtrag am Werkstück kurz sind. Die geeigneten Pulsdauern und Pulsabstände sind je nach Material der Elektrode und Material des Werkstückes zu ermitteln.

Während des Überarbeitens der Erodierelektrode an der zur erosiven Bearbeitung vorbereiteten Oberfläche findet in der Regel ein geringer Abtrag dieser Oberfläche statt, so dass ein flaches Abbild der Erodierelektrode in die Oberfläche eingeprägt wird. Vorteilhafterweise erfolgt daher das Überarbeiten der Erodierelektrode in einem Abschnitt der vorbereiteten Oberfläche, welche später der erosiven Bearbeitung unterzogen werden soll. Bei der erosiven Bearbeitung kann das eingeprägte Abbild der Erodierelektrode dann beseitigt werden.

Das erfindungsgemäße Verfahren lässt sich insbesondere mit Turbinenschaufeln, also beispielsweise Leit- oder Laufschaufeln von Turbinen, als Werkstücken realisieren. Derartige Turbinenschaufeln sind häufig aus hochwarmfesten Superlegierungen auf Nickel-, Kobalt- oder Eisenbasis hergestellt, weswegen sie außer durch Funkenerosion nicht ohne weiteres zu bearbeiten sind. Als für die erosive Bearbeitung vorbereitete Oberfläche kann dann beispielsweise eine plangeschliffene Schaufelfunktionsfläche Verwendung finden.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.

Es zeigen:
- Fig. 1: beispielhaft eine Gasturbinenanlage in einem Längsteilschnitt,
- Fig. 2: in einer perspektivischen Ansicht eine Laufschaufel oder Leitschaufel eine Strömungsmaschine,
- Fig. 3: eine Brennkammer eine Gasturbinenanlage,
- Fig. 4: einen Ausschnitt aus einer Gasturbinenschaufel,
- Figuren 5a - 5c: schematisch das erosive Bearbeiten einer Turbinenschaufel,
- Figuren 6a - 6c: schematisch das Abrichten einer verschlissenen Erodierelektrode.

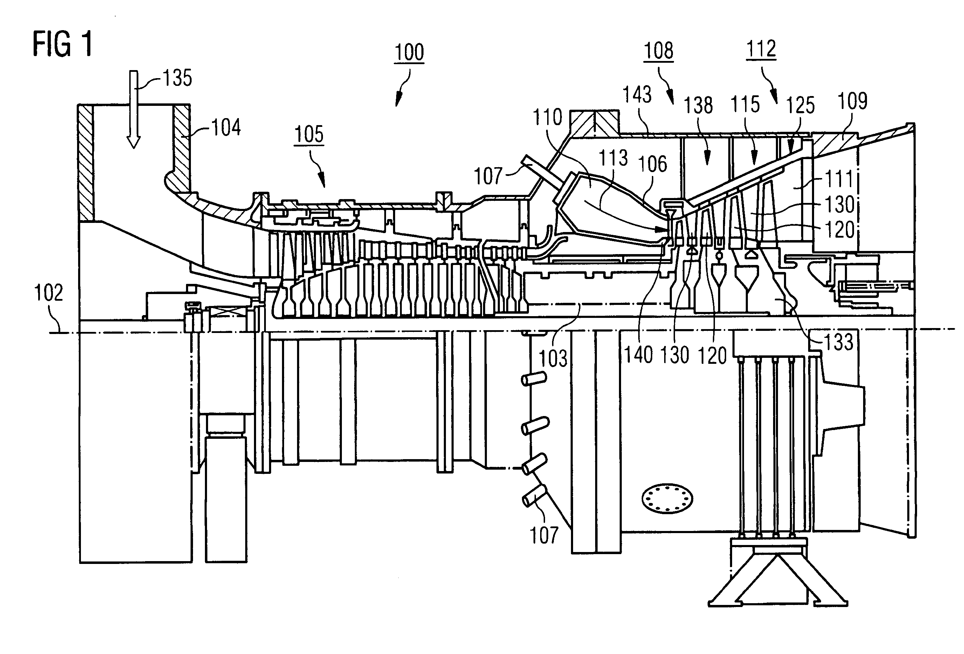

Die Figur 1 zeigt beispielhaft eine Gasturbine 100 in einem Längsteilschnitt. Die Gasturbine 100 weist im Inneren einen um eine Rotationsachse 102 drehgelagerten Rotor 103 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet. Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

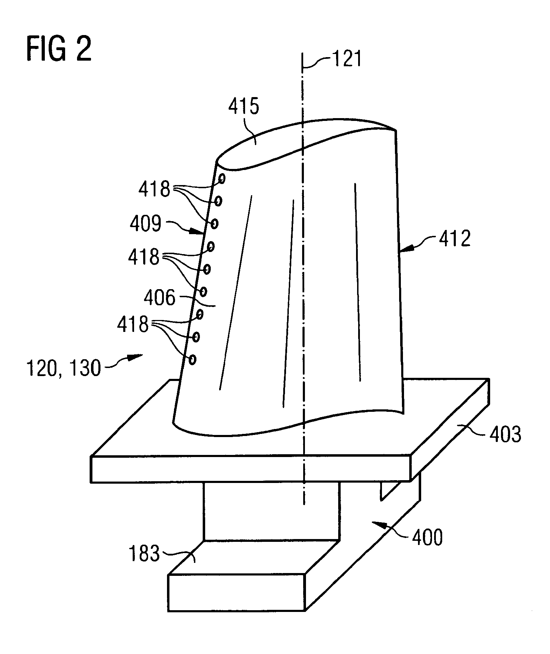

Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf. Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet. Solche Superlegierungen sind beispielsweise aus der EP 1 204 776 B1, EP 1 306 454, EP 1 319 729 A1, WO 99/67435 oder WO 00/44949 bekannt. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind. Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt. Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt.

Ebenso können die Schaufeln 120, 130 Beschichtungen gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

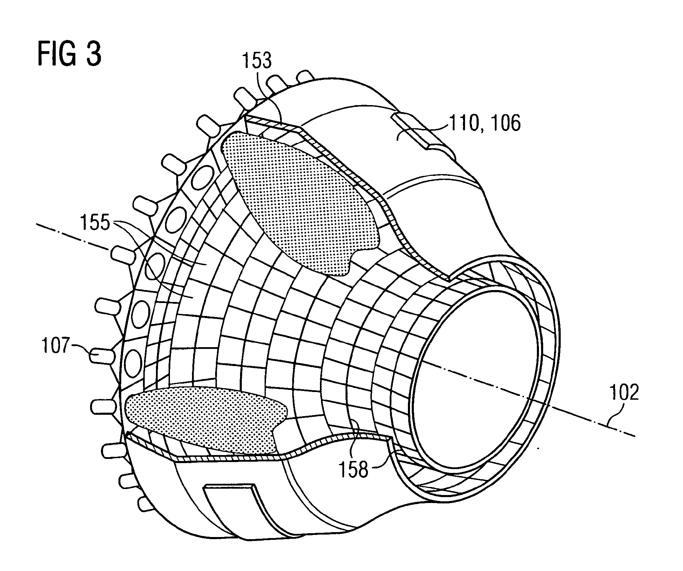

Die Figur 3 zeigt eine Brennkammer 110 einer Gasturbine. Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 ist arbeitsmediumsseitig mit einer besonders hitzebeständigen Schutzschicht ausgestattet oder aus hochtemperaturbeständigem Material gefertigt. Dies können massive keramische Steine oder Legierungen mit MCrAlX und/oder keramischen Beschichtungen sein. Die Materialien der Brennkammerwand und deren Beschichtungen können ähnlich der Turbinenschaufeln sein.

Aufgrund der hohen Temperaturen im Inneren der Brennkammer 110 kann zudem für die Hitzeschildelemente 155 bzw. für deren Halteelemente ein Kühlsystem vorgesehen sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

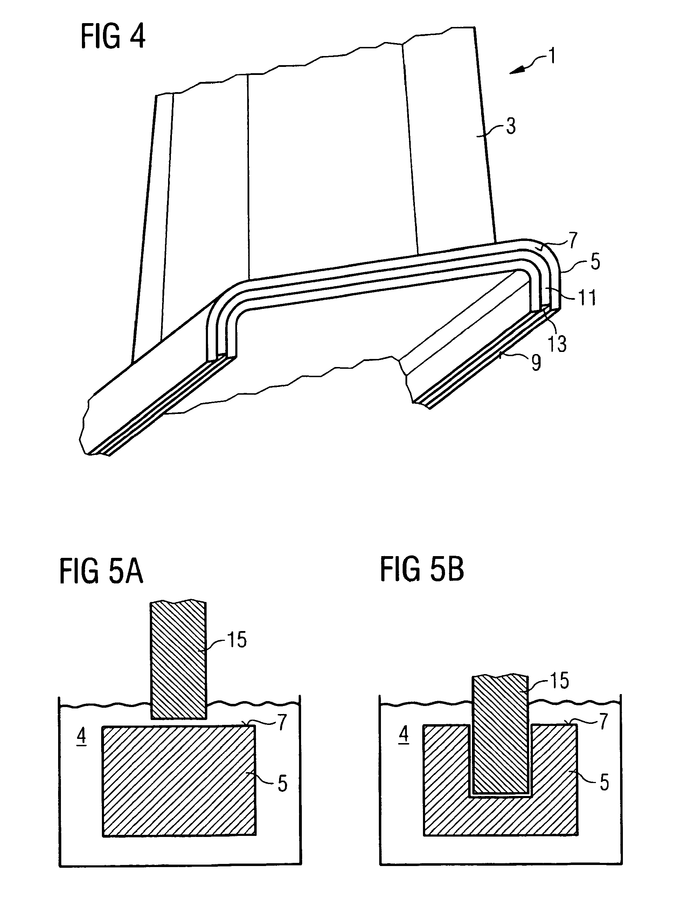

Als ein erosiv zu bearbeitendes Werkstück ist in Figur 4 ausschnittsweise eine Turbinenschaufel dargestellt. Es sind insbesondere das Schaufelblatt 3 und die Schaufelplattform 5 zu erkennen. Die Schaufelplattform 5 weist Funktionsflächen 7, 9 auf, in denen Nuten 11, 13 vorhanden sind. Wenn die Turbinenschaufel 1 in eine Gasturbinenanlage eingebaut wird, greifen in diese Nuten 11, 13 Dichtelemente ein, um den Strömungskanal der Gasturbinenanlage abzudichten.

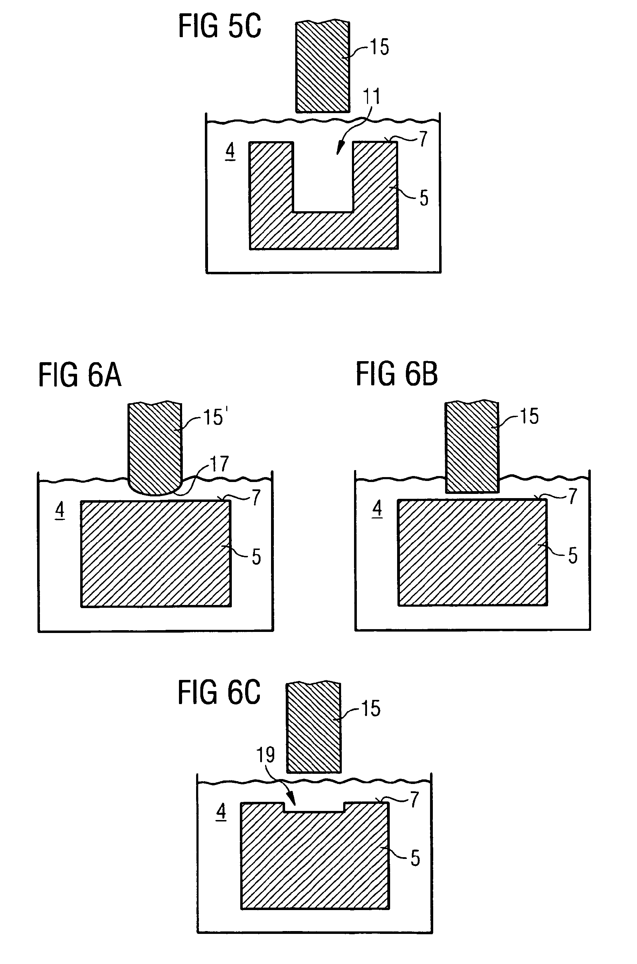

Das Einbringen der Nuten 11, 13 erfolgt im Senkverfahren und ist schematisch in den Figuren 5a bis 5c dargestellt. Nachdem die Funktionsfläche 7 der Schaufelplattform 5 in einem vorbereitenden Schritt plangeschliffen worden ist, wird zumindest die Schäufelplattform 5 zusammen mit einer an den geplanten Verlauf der Nut 11 angepassten Erodierelektrode 15 in ein dielektrisches Bad 4 gegeben, wo die Erodierelektrode 15 dann nah an die Funktionsfläche 7 herangeführt wird. Mittels Spannungspulsen zwischen der Erodierelektrode 15 und der Funktionsfläche 7 wird ein Funkenüberschlag herbeigeführt, welcher zu einem Material der Schaufelplattform 5 verdampfenden Plasmakanal führt. Die Pulsdauer und die Pulsabstände der zugeführten Spannungspulse sind dabei so eingestellt, dass ein Materialabtrag im Wesentlichen an der Schaufelplattform 5 stattfindet. Für eine Schaufelplattform 5 aus einem auf Nickel oder Kobalt basierenden Superlegierungsmaterial kann hierbei insbesondere eine Erodierelektrode aus Kupfer oder Graphit zur Anwendung kommen. Durch Absenken der Erodierelektrode 15 wird die Nut 11 in die Funktionsfläche 7 eingebracht (vgl. Fig. 5b und Fig. 5c).

Während des erosiven Bearbeitens der Funktionsfläche 7 findet zwar der hauptsächliche Materialabtrag an der Funktionsfläche 7 statt, jedoch erfolgt auch ein Materialabtrag an der Erodierelektrode 15, der zu einem Verschleiß der Erodierelektrode 15 führt. Als Folge weist die Erodierelektrode 15', insbesondere in ihrem zum Werkstück 5 hinzugewandten Abschnitt 17 nicht mehr die optimale Form für das Fertigen der gewünschten Funktionsfläche auf (vgl. Fig. 6a). Ab einem gewissen Grad des Verschleißes wird eine Erodierelektrode 15' daher vor der Aufnahme der erosiven Bearbeitung abgerichtet, um den ursprünglichen Zustand wieder herzustellen. Dieses Abrichten ist in den Figuren 6a bis 6c schematisch dargestellt.

Vor dem eigentlichen erosiven Bearbeiten der Schaufelplattform 5 wird die verschlissene Erodierelektrode 15' wie zu einem normalen Bearbeitungsschritt an die vorbereitete Funktionsfläche 7 der Schaufelplattform 5 herangeführt. Die elektrischen Betriebsparameter werden aber so eingestellt, dass ein hoher Materialabtrag an der Erodierelektrode 15 erfolgt und der Materialabtrag an der Schaufelplattform 5 gering ist. Dies kann beispielsweise erreicht werden, indem kurze Pulsdauern für die Spannungspulse eingestellt werden. Der Betrieb der Funkenerosionsanlage mit diesen Betriebsparametern führt dazu, dass sich die Form der Erodierelektrode 15 insbesondere in ihrem der Funktionsfläche 7 zugewandten Abschnitt 17 an die Form der Funktionsfläche 7 anpasst, wie dies in Figur 6b dargestellt ist. Da in der Regel auch ein geringfügiger Materialabtrag an der Schaufelplattform 5 stattfindet, entsteht dabei in der Funktionsfläche 7 ein flaches Abbild 19 der Erodierelektrode 15. Damit in der fertig bearbeiteten Turbinenschaufel 1 kein aus dem Abrichtprozess herrührendes Abbild übrig bleibt, findet der Abrichtprozess dort statt, wo später die Nut 11 in die Funktionsfläche 7 eingebracht werden soll. Während des Senkprozesses zum Einbringen der Nut 11 wird das Abbild 19 dann vollständig beseitigt.

Das mit Bezug auf die Figuren 6a bis 6c beschrieben Abrichten der Erodierelektrode 15 kann insbesondere nach dem vorbereiten der erosiv zu bearbeitenden Funktionsfläche 7 und vor dem Senkprozess zum Einbringen der Nut 11 in die Funktionsfläche 7 erfolgen. Der Übergang vom Abricht- zum Senkprozess kann durch einfaches Umstellen der elektrischen Parameter erfolgen. Der Senkprozess erfolgt dann genau dort, wo beim Abrichten das Abbild 19 der Erodierelektrode 15 eingeprägt worden ist, so dass das Abbild 19 ohne Neujustierung der Erodierelektrode 15 beseitigt wird. Auf diese Weise kann jedes Werkstück mit einer frisch abgerichteten Erodierelektrode 15 bearbeitet werden, ohne das zum Abrichten ein Ausbau der Erodierelektrode aus den Elektrodenhalterungen notwendig ist und ohne das ein Abbild vom Abrichtprozess zurückbleibt.

## Patentansprüche

1. Verfahren zum erosiven Bearbeiten eines Werkstückes (1)
mit einer zur erosiven Bearbeitung vorbereiteten Oberfläche (7) mit einer Erodierelektrode (15),
welche zum erosiven Materialabtrag an dem Werkstück (1) durch Spannungspulse zwischen der Erodierelektrode (15) und dem Werkstück (1) eingesetzt werden,
wobei die verschlissene Erodierelektrode (15') zur Überarbeitung auf eine bereits für das Durchführen der erosiven Bearbeitung vorbereitete Oberfläche (7) des Werkstücks (1) gerichtet wird und
wobei die elektrischen Parameter für die Spannungspulse zwischen der Erodierelektrode (15') und dem Werkstück (1) derart eingestellt werden,
dass an der Erodierelektrode (15') ein stärkerer Materialabtrag als an der vorbereiteten Oberfläche (7) stattfindet,
**dadurch gekennzeichnet, dass**
in die vorbereitete Oberfläche (7) des Werkstücks (1) eine Nut (11, 13) mittels elektroerosivem Senken eingebracht wird,
wobei vor der erosiven Bearbeitung der Oberfläche (7) das Überarbeiten der Erodierelektrode (15') in einem Abschnitt der vorbereiteten Oberfläche (7) erfolgt, welcher dem erosiven Materialabtrag unterzogen werden soll.

2. Verfahren nach Anspruch 1,
**dadurch gekennzeichnet, dass**
als zu bearbeitendes Werkstück eine Turbinenschaufel (1) mit einer plangeschliffenen Schaufelfunktionsfläche (7) als vorbereiteter Oberfläche Verwendung findet.

3. Verfahren nach Anspruch 1,
**dadurch gekennzeichnet, dass**
zum Überarbeiten der Erodierelektrode (15') Spannungspulse mit einer Pulsdauer gewählt werden, die im Vergleich zu den Spannungspulsen zum erosiven Materialabtrag am Werkstück (1) kurz sind.

## Claims

1. Method for the erosion machining of a workpiece (1) with a surface (7) prepared for erosion machining using an erosion electrode (15),
which is used for the erosion material removal on the workpiece (1) by voltage pulses between the erosion electrode (15) and the workpiece (1),
wherein the worn erosion electrode (15') for reworking is directed onto a surface (7) of the workpiece (1) which has already been prepared for carrying out the erosion machining, and
wherein the electrical parameters for the voltage pulses between the erosion electrode (15') and the workpiece (1) are set in such a manner
that more severe material removal takes place on the erosion electrode (15') than on the prepared surface (7),
**characterized in that**
a groove (11, 13) is made in the prepared surface (7) of the workpiece (1) by means of electroerosive countersinking,
wherein the erosion machining of the surface (7) is preceded by the reworking of the erosion electrode (15') in a portion of the prepared surface (7) which is intended to be subjected to the erosion material removal.

2. Method according to Claim 1,
**characterized in that**
a turbine blade or vane (1) having a surface-ground functional blade or vane surface (7) as the prepared surface is used as the workpiece to be machined.

3. Method according to Claim 1,
**characterized in that**
voltage pulses having a pulse duration which are short compared to the voltage pulses for the erosion material removal on the workpiece (1) are selected for the reworking of the erosion electrode (15').

## Revendications

1. Procédé d'usinage par érosion d'une pièce ( 1 ), ayant une surface ( 7 ) traitée au préalable pour l'usinage par érosion, par une électrode ( 15 ) d'érosion,
qui est utilisée pour l'enlèvement de matières par érosion sur la pièce ( 1 ) par des impulsions de tension entre l'électrode ( 15 ) d'érosion et la pièce ( 1 ),
dans lequel l'électrode ( 15 ) d'érosion usée est dirigée, pour la révision, sur une surface ( 7 ) de la pièce déjà préparée au préalable pour l'exécution de l'usinage par érosion, et
dans lequel on règle les paramètres électriques des impulsions de tension entre l'électrode ( 15' ) d'érosion et la pièce ( 1 ),
de manière à ce qu'un enlèvement de matière plus grand ait lieu sur l'électrode ( 15' ) d'érosion que sur la surface ( 7 ) préparée à l'avance,
**caractérisé en ce que**
on ménage, au moyen d'un puits d'électroérosion, une rainure ( 11, 13 ) dans la surface ( 7 ) préparée à l'avance de la pièce ( 1 ),
la révision de l'électrode ( 15' ) d'érosion s'effectuant avant l'usinage par érosion de la surface ( 7 ) dans une partie de la surface ( 7 ) traitée à l'avance, qui doit être soumise à l'enlèvement de matière par érosion.

2. Procédé suivant la revendication 1,
**caractérisé en ce que**
l'on utilise comme pièce à usiner, une aube ( 1 ) de turbine ayant une surface ( 7 ) fonctionnelle d'aube rectifiée plane comme surface préparée à l'avance.

3. Procédé suivant la revendication 1,
**caractérisé en ce que**
pour la révision de l'électrode ( 15' ) d'érosion, on choisit des impulsions de tension d'une durée qui sont petites par rapport aux impulsions de tension pour l'enlèvement de matière par érosion sur la pièce ( 1 ).
